# DEMANDE DE BREVET EUROPEEN

(11) **EP 1 847 790 A1**
(43) Date de publication de la demande: **24.10.2007**
(21) Numéro de dépôt: 07104596.7
(22) Date de dépôt: 21.03.2007
(51) Int. Cl.: F25D 13/06

(54) **Dispositif de refroidissement de produits sur support ajouré destiné à laisser passer un flux d'air froid, incluant des moyens de mise en turbulence du flux d'air froid passé au travers dudit support**

(30) Priorité: 18.04.2006 FR 0603404
(71) Demandeur: C.I.M.S., 72032 Sablé-sur-Sarthe (FR)
(72) Inventeur: Munoz, Yves, 72300, AUVERS LE HAMON (FR)
(74) Mandataire: Larcher, Dominique

(57) **Abrégé**

L'invention a pour objet un dispositif de refroidissement de produits alimentaires, du type comprenant une enceinte à l'intérieur de laquelle lesdits produits défilent à l'aide d'un support mobile (3), ledit dispositif incluant des moyens de génération d'un flux d'air froid en direction d'une face dudit support, dite face amont (31),
caractérisé en ce que ledit support (3) est ajouré de façon à permettre le passage d'une partie dudit flux d'air, dit flux traversant, et des moyens de mise en turbulence (5), du côté et au voisinage de la face (32) dudit support (3) opposée à ladite face amont (31), dudit flux traversant.

## Description

L'invention concerne le domaine du froid industriel. Plus précisément, l'invention concerne les dispositifs de refroidissement de produits, en particulier alimentaires, du type de ceux dans lesquels les produits défilent dans une enceinte de refroidissement avant conditionnement.

Dans l'industrie agroalimentaire, les exigences normatives et réglementaires en matière de chaîne du froid sont de plus en plus strictes. Suivant la nature du produit alimentaire et la durée de conservation que l'on envisage pour celui-ci, différentes techniques de refroidissement peuvent être utilisées.

Parmi celles-ci on connaît notamment les tunnels de refroidissement, selon lesquels les produits alimentaires défilent dans une enceinte intégrant des moyens de génération d'air froid, appelés également batterie d'air froid, le défilement des produits étant assuré par un tapis déroulant sur lequel ces produits reposent. Généralement, le tapis déroulant chemine à l'intérieur de l'enceinte.

Classiquement, les moyens de génération d'air froid intégrés dans l'enceinte de ces tunnels comprennent un ventilateur, formant moyen de soufflage.

On connaît notamment une technique selon laquelle la batterie d'air froid est constituée par un échangeur à ailettes placé entre le ventilateur d'air froid et les produits à refroidir, aucun moyen spécifique n'étant prévu pour répartir l'air froid de façon homogène à l'intérieur de l'enceinte.

Cette technique présente plusieurs inconvénients.

En premier lieu, l'air froid n'étant pas réparti de façon homogène à l'intérieur de l'enceinte, il est généralement nécessaire de maintenir plus longtemps les produits à l'intérieur de l'enceinte pour atteindre le refroidissement désiré.

En second lieu, l'efficacité d'un tel tunnel dépend de la canalisation de l'air de l'échangeur vers les produits à refroidir.

On connaît également une autre technique selon laquelle on tente de répartir l'air froid à l'intérieur de l'enceinte à l'aide d'une plaque pourvue d'une pluralité de trous, cette plaque étant placée entre le ventilateur d'air froid et les produits à refroidir.

Cette technique présente elle aussi plusieurs inconvénients.

En effet, la présence d'une telle plaque induit une perte de charge en ce qui concerne le flux d'air froid soufflé.

Pour compenser cette perte de charge, on prévoit généralement d'équiper le tunnel de refroidissement d'un ventilateur plus puissant. Cependant, cette augmentation de puissance est obtenue en ayant recours à un moteur de capacité plus importante qui a pour effet d'induire un dégagement de chaleur également plus important, ce qui, bien évidemment, porte atteinte à l'objectif recherché.

En outre, cette technique n'assure pas correctement le plaquage du film sur la sole, ce qui, comme indiqué précédemment, nuit au transfert du froid de la sole refroidie vers les produits.

Selon une autre caractéristique décrite dans le document de brevet publié sous le numéro FR-2 851 426 et déposé au nom de la présente Demanderesse, le dispositif de refroidissement comprend au moins un caisson dans lequel l'air froid est soufflé, ledit caisson étant pourvu de fentes de façon à générer un flux d'air froid lamellaire dirigé vers les produits.

De cette façon, on obtient une bonne répartition de l'air froid à l'intérieur de l'enceinte, et ceci en supprimant, ou à tout le moins en limitant les pertes de charges constatées dans certaines des techniques de l'art antérieur.

Aussi, du fait de la meilleure répartition de l'air froid dans l'enceinte, on améliore l'efficacité du refroidissement, ce qui permet d'envisager une réduction du temps de présence des produits dans l'enceinte, et donc d'augmenter les cadences en termes de vitesse de défilement des produits.

Cette technique s'avère donc en pratique très avantageuse, mais présente cependant certaines limites et/ou inconvénients.

En effet, pour des générateurs d'air froid d'une puissance donnée, on atteint certaines limites en termes de chargement de produits, limites au-delà desquelles les produits ne sont plus refroidis de façon satisfaisante.

Bien entendu, il est possible d'augmenter la puissance des générateurs, mais cela serait au détriment du coût de l'installation et/ou de son exploitation.

De plus, cette technique met en oeuvre une sole refroidie sur laquelle transitent les produits à l'aide d'un film déroulant, ceci pour assurer un refroidissement et par le dessus et par le dessous des produits.

Or, ce film déroulant, pour des raisons sanitaires évidentes, est à usage unique. Il constitue donc un consommable, ce qui tend à augmenter les coûts d'exploitation.

En outre, l'efficacité de la sole refroidie est liée à la mise en contact des produits sur celle-ci.

On comprend donc que certains produits présentent une forme adaptée au recours à la sole refroidie (du fait de la planéité relative de la base des produits reposant sur la sole), et d'autres pas.

On note que, de façon générale, un objectif des concepteurs des dispositifs de refroidissement est d'améliorer l'efficacité d'échange d'énergie entre l'air refroidi et les produits à refroidir, ceci quel que soit le support sur lequel les produits sont placé.

L'invention a notamment pour objectif de pallier les inconvénients de l'art antérieur.

Plus précisément, l'invention a pour objectif de proposer un dispositif de refroidissement de produits circulant dans une enceinte qui soit plus performant que les solutions de l'art antérieur.

L'invention a également pour objectif de fournir un tel dispositif de refroidissement qui permette d'augmenter les chargements en produits et/ou de diminuer les temps de refroidissement, ceci sans augmenter la puissance des générateurs d'air froid.

L'invention a aussi pour objectif de fournir un tel dispositif de refroidissement qui permette de refroidir efficacement des produits de forme quelconque, voire complexe.

L'invention a encore pour objectif de fournir un dispositif de refroidissement qui puisse être mis en oeuvre à partir de dispositifs existants à l'aide d'adaptations simples et/ou peu coûteuses.

Un autre objectif de l'invention est de fournir un tel dispositif de refroidissement qui soit simple de conception et facile à mettre en oeuvre.

Ces objectifs, ainsi que d'autres qui apparaîtront par la suite, sont atteints grâce à l'invention qui a pour objet un dispositif de refroidissement de produits alimentaires, du type comprenant une enceinte à l'intérieur de laquelle lesdits produits défilent à l'aide d'un support mobile, ledit dispositif incluant des moyens de génération d'un flux d'air froid en direction d'une face dudit support, dite face amont, caractérisé en ce que ledit support est ajouré de façon à permettre le passage d'une partie dudit flux d'air, dit flux traversant, et des moyens de mise en turbulence, du côté et au voisinage de la face dudit support opposée à ladite face amont, dudit flux traversant.

Ainsi, grâce à l'invention, on obtient une meilleure répartition et une meilleure exploitation du flux d'air froid à l'intérieur de l'enceinte.

En effet, à partir d'un même flux d'air froid, on peut refroidir les produits de chaque côté du support qui les transporte.

De plus, la mise en turbulence du flux d'air froid d'un côté du support tend à améliorer l'efficacité du refroidissement, ceci en optimisant le contact du flux avec les produits.

On note en outre que ce contact des produits avec le flux mis en turbulence s'affranchit de la qualité du contact entre les produits et le support qui les transporte.

Il est donc possible de refroidir efficacement des produits de forme quelconque, le refroidissement de la base des produits n'étant pas lié à la planéité du contact des produits avec le support comme c'est le cas avec les soles refroidies.

Par ailleurs, le refroidissement efficace étant assuré grâce à l'invention en l'absence de sole refroidie, le recours à un film déroulant consommable pour le transport des produits n'a plus lieu d'être.

L'invention permet donc de supprimer les coûts liés au consommable constitué par le film déroulant, et donc de réduire en conséquence les coûts d'exploitation.

Selon une solution préférée, lesdits moyens de mise en turbulence comprennent des parois sur lesquelles ledit flux traversant est destiné à rebondir, lesdites parois présentant une forme conçue pour faire tourbillonner ledit flux traversant.

On obtient ainsi une solution simple et efficace pour engendrer la mise en turbulence du flux d'air froid.

Selon une solution avantageuse, lesdits moyens de mise en turbulence comprennent des moyens de guidage dudit flux traversant mis en turbulence vers les extrémités latérales dudit support.

De cette façon, l'intégralité du flux d'air froid pulsé peut être recirculé vers les moyens de génération, assurant par conséquent au dispositif un rendement optimisé.

Selon un mode de réalisation préférentiel de l'invention, lesdits moyens de mise en turbulence comprennent une série de goulottes.

De cette façon, et comme cela apparaîtra plus clairement par la suite, les moyens de mise en turbulence peuvent présenter une conception particulièrement simple et être peu coûteux à réaliser et à mettre en oeuvre.

Préférentiellement, lesdites goulottes s'étendent transversalement par rapport audit support.

Une recirculation de l'air froid en direction des moyens de génération d'air froid peut être obtenu en guidant l'air vers les extrémités des goulottes. La disposition transversale de celle-ci permet donc de répartir les extrémités sur toute la longueur de l'enceinte, ou quasiment, ce qui optimise la quantité et/ou le débit d'air recirculé.

Avantageusement, lesdites goulottes présentent une section dont la forme appartient au groupe suivant :
- U ;
- V ;
- parabolique ;
- semi-circulaire ;
- semi-ovoïde.

De telles sections peuvent aisément être obtenues par des techniques classiques de formage et/ou de pliage de tôles par exemple.

Préférentiellement, lesdites goulottes sont régulièrement réparties sous ledit support.

On obtient ainsi un refroidissement homogène sur la longueur du support.

Selon une solution avantageuse, lesdites goulottes sont constituées par une série de plis réalisés sur au moins une feuille métallique.

On peut ainsi fabriquer les moyens de mise en turbulence par des techniques traditionnelles, avec des matériaux courant et de façon coûteuse.

Préférentiellement, ledit support ajouré comprend un grillage destiné à recevoir lesdits produits.

Selon une solution préférée, lesdits moyens de génération d'un flux d'air froid comprennent au moins un caisson dans lequel ledit air froid est soufflé, ledit caisson étant pourvu de fentes de façon à générer un flux d'air froid lamellaire.

Une telle technique de génération d'air froid sous forme d'un flux lamellaire s'avère particulièrement efficace dans le contexte de l'invention.

En effet, le flux d'air froid lamellaire ainsi obtenu se prête tout à fait à l'effet des moyens de mise en turbulence.

Préférentiellement, lesdits moyens de génération d'un flux d'air froid sont situés au-dessus dudit support et lesdits moyens de mise en turbulence au-dessous dudit support.

D'autres caractéristiques et avantages de l'invention apparaîtront plus clairement à la lecture de la description suivante d'un mode de réalisation préférentiel de l'invention, donné à titre d'exemple illustratif et non limitatif, en référence aux dessins parmi lesquels :
- les figures 1 et 2 sont des vues d'un module d'un dispositif de refroidissement selon l'invention, respectivement de face et de côté;
- la figure 3 est une vue de perspective d'un module d'un dispositif de refroidissement selon l'invention ;
- la figure 4 illustre l'effet d'un dispositif de refroidissement selon l'invention sur le flux d'air froid.

Tel qu'indiqué précédemment, le principe de l'invention réside dans le fait de permettre au flux d'air froid de traverser le support sur lequel circulent les produits et de mettre en turbulence le flux d'air froid ayant traversé le support.

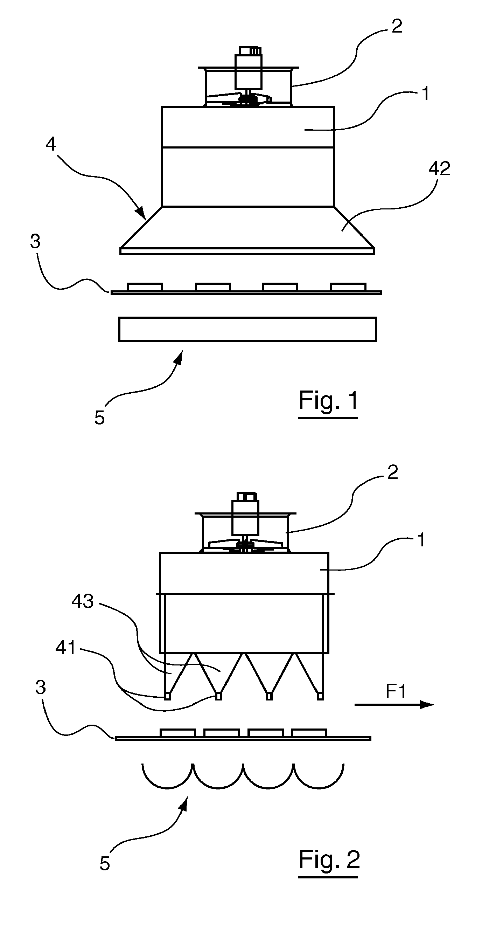

En référence aux figures 1 à 3, un dispositif de refroidissement du type de celui de l'invention comprend, de façon connue en soi, une enceinte (non représentée) incluant une batterie d'air froid 1 et un ventilateur 2. Un tel dispositif comprend également un support 3 sur lequel sont disposés des produits à refroidir, le déplacement de ces produits à l'intérieur de l'enceinte étant assuré par le défilement du support.

L'air froid généré par la batterie 1 est soufflé à l'intérieur d'un caisson pourvu de fentes 41 permettant de générer un flux d'air froid lamellaire dirigé vers les produits.

Selon le présent mode de réalisation, ce caisson est constitué par un ensemble de tuyères 4 conçues et positionnées sous la batterie d'air froid 1 de telle sorte que l'axe longitudinal des fentes 41 soit sensiblement perpendiculaire à l'axe de défilement des produits indiqué par la flèche F1 sur la figure 2.

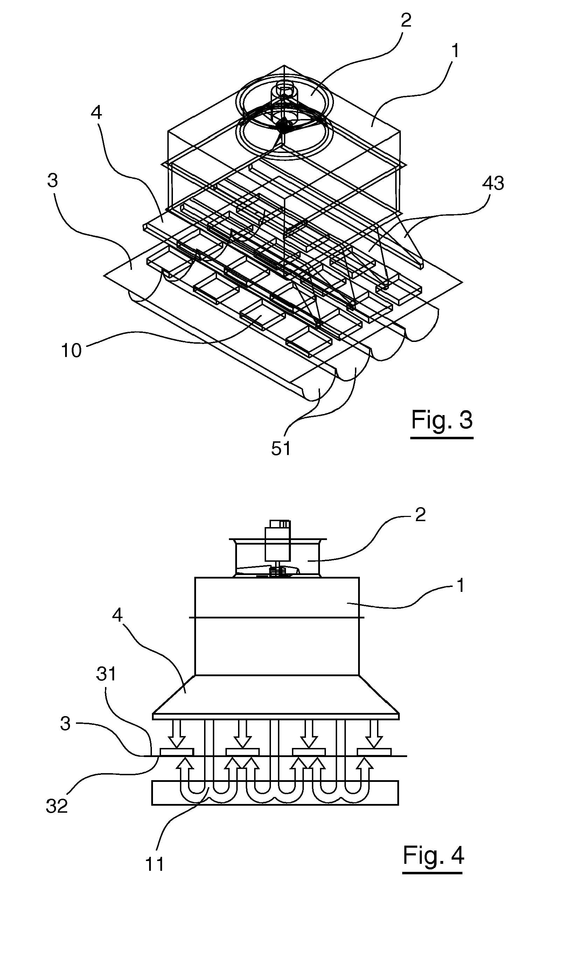

Comme cela apparaît sur les figures 2 et 3, les fentes 41 des tuyères 4 s'étendent sensiblement sur toute la largeur du support 3, les tuyères 4 étant par ailleurs réparties sur toute la longueur du support (l'enceinte intégrant éventuellement pour cela plusieurs modules de refroidissement comprenant chacun une batterie d'air froid).

On note que, selon un autre mode de réalisation envisageable, les tuyères pourraient être conçues et positionnées sous la batterie d'air froid de façon que les fentes dont elles sont pourvues s'étendent sensiblement sur toute la longueur de la sole, en étant réparties sensiblement sur toute la largeur de la sole.

Selon le présent mode de réalisation, les tuyères 4 comprennent deux parois longitudinales 42 qui convergent en direction de la fente 41 correspondante et formant moyens de guidage de l'air froid en direction de celle-ci.

Ces parois longitudinales 42 sont reliées entre elles par des parois latérales 43 qui divergent l'une par rapport à l'autre en direction des fentes 41.

En d'autres termes, chacune des tuyères 4 présente, vue de face en considérant l'axe de défilement des produits, une forme d'éventail ouvert en direction des produits, tandis qu'elle présente un profil en forme d'entonnoir qui se rétrécit en direction des produits à refroidir.

Selon le principe de l'invention, un tel dispositif de refroidissement est équipé d'un support 3 ajouré permettant au flux d'air froid généré par la batterie 1 et pulsé par les tuyères 4 de passer au travers du support, le dispositif comprenant en outre des moyens de mise en turbulence 5.

De cette façon, tel qu'illustré par la figure 4, le flux d'air est dirigé vers une face amont 31 (dans le sens du flux d'air pulsé par les tuyères) du support, impacte les produits sur un côté amont de ceux-ci ou passe entre les produits au travers du support. Le flux traversant 11 le support est alors mis en turbulence du côté de la face avale 32 du support au voisinage de celle-ci de façon à refroidir le côté aval des produits.

Comme cela apparaît sur la figure 4, les moyens de mise en turbulence sont prévus de telle sorte que le flux traversant rebondisse et soit redirigé en formant une sorte de tourbillon en direction des produits.

On note que selon le dispositif de refroidissement illustré, les moyens de générations d'air froid sont positionnés au-dessus des produits, les moyens de mise en turbulence étant par conséquent positionnés en dessous des produits.

Il est toutefois possible, selon un autre mode de réalisation envisageable, de prévoir une disposition inverse, c'est-à-dire en positionnant les moyens de génération en dessous des produits et les moyens de mise en turbulence au-dessus des produits.

Selon le présent mode de réalisation, les moyens de mise en turbulence comprennent une série de goulottes 51 disposées transversalement par rapport au sens de défilement des produits et régulièrement répartis sous le support 3, préférentiellement sur toute la longueur de celui-ci.

Tel que cela apparaît, les goulottes 51 présentent une section en U semi-circulaire. Ces goulottes sont réalisées à partir d'une feuille métallique mise en forme par exemple par une technique d'emboutissage.

On note que les goulottes peuvent présenter d'autres formes envisageables, par exemple avec une section de forme semi-ovoïde, voire en V (éventuellement avec les branches du V incurvées).

On note également que la forme des goulottes et leur disposition transversales par rapport au défilement des produits constituent un moyen de guidage optimisé du flux d'air vers les extrémités latérales du support.

Ainsi, en ménageant une distance entre les extrémités des goulottes et les parois latérales de l'enceinte, un passage est formé pour permettre au flux d'air froid soufflé de remonter le long des parois de l'enceinte en direction du ventilateur 2, le flux d'air étant aspiré en vue d'être réinjecté dans la batterie d'air froid 1.

Par ailleurs, le support ajouré 3 comprend un grillage sur lequel on dispose les produits 10 à refroidir, ce grillage étant réalisé sous forme d'une grille en matériau métallique, ou en matériau plastique voire en textile.

Si besoin, un dispositif annexe de nettoyage du support peut être associé au dispositif de refroidissement qui vient d'être décrit.

A titre indicatif, un dispositif de refroidissement selon l'invention permet de travailler à des températures descendant jusqu'à - 50° C, avec des vitesses de flux d'air froid de l'ordre de 40 m/s.

## Revendications

1. Dispositif de refroidissement de produits alimentaires, du type comprenant une enceinte à l'intérieur de laquelle lesdits produits défilent à l'aide d'un support mobile (3), ledit dispositif incluant des moyens de génération d'un flux d'air froid en direction d'une face dudit support, dite face amont (31),
**caractérisé en ce que** ledit support (3) est ajouré de façon à permettre le passage d'une partie dudit flux d'air, dit flux traversant, et des moyens de mise en turbulence (5), du côté et au voisinage de la face (32) dudit support (3) opposée à ladite face amont (31), dudit flux traversant.

2. Dispositif de refroidissement selon la revendication 1, **caractérisé en ce que** lesdits moyens de mise en turbulence (5) comprennent des parois sur lesquelles ledit flux traversant est destiné à rebondir, lesdites parois présentant une forme conçue pour faire tourbillonner ledit flux traversant.

3. Dispositif de refroidissement selon l'une des revendications 1 et 2, **caractérisé en ce que** lesdits moyens de mise en turbulence (5) comprennent des moyens de guidage dudit flux traversant mis en turbulence vers les extrémités latérales dudit support (3).

4. Dispositif de refroidissement selon l'une quelconque des revendications 1 à 3, **caractérisé en ce que** lesdits moyens de mise en turbulence (5) comprennent une série de goulottes (51).

5. Dispositif de refroidissement selon les revendications 3 et 4, **caractérisé en ce que** lesdites goulottes (51) s'étendent transversalement par rapport audit support (3).

6. Dispositif de refroidissement selon l'une des revendications 4 et 5, **caractérisé en ce que** lesdites goulottes (51) présentent une section dont la forme appartient au groupe suivant :
- U;
- V;
- parabolique ;
- semi-circulaire ;
- semi-ovoïde.

7. Dispositif de refroidissement selon l'une quelconque des revendications 4 à 6, **caractérisé en ce que** lesdites goulottes (51) sont régulièrement réparties sous ledit support (3).

8. Dispositif de refroidissement selon l'une quelconque des revendications 4 à 7, **caractérisé en ce que** lesdites goulottes (51) sont constituées par une série de plis réalisés sur au moins une feuille métallique.

9. Dispositif de refroidissement selon l'une quelconque des revendications 1 à 8, **caractérisé en ce que** ledit support (3) ajouré comprend un grillage destiné à recevoir lesdits produits.

10. Dispositif de refroidissement selon l'une quelconque des revendications 1 à 9, **caractérisé en ce que** lesdits moyens de génération d'un flux d'air froid comprennent au moins un caisson (4) dans lequel ledit air froid est soufflé, ledit caisson étant pourvu de fentes (41) de façon à générer un flux d'air froid lamellaire.

11. Dispositif de refroidissement selon l'une quelconque des revendications 1 à 10, **caractérisé en ce que** lesdits moyens de génération d'un flux d'air froid sont situés au-dessus dudit support (3) et lesdits moyens de mise en turbulence (5) au-dessous dudit support (3).
